# EUROPEAN PATENT SPECIFICATION

(11) **EP 3 000 629 B1**
(45) Date of publication and mention of the grant of the patent: **08.11.2017**
(21) Application number: 15186495.6
(22) Date of filing: 23.09.2015
(51) Int. Cl.: B60D 1/02

(54) **TOW HITCH IN PARTICULAR FOR TRAILER VEHICLES**
ANHÄNGEKUPPLUNG INSBESONDERE FÜR ANHÄNGERFAHRZEUGE
CROCHET D'ATTELAGE NOTAMMENT POUR UNE REMORQUE

(30) Priority: 24.09.2014 IT MI20141658
(43) Date of publication of application: 30.03.2016
(73) Proprietor: V. Orlandi S.p.A., 25020 Flero BS (IT)
(72) Inventor: TAGLIAFERRI, Carlo, 25124 BRESCIA (IT)
(74) Representative: Tansini, Elio Fabrizio

(56) References cited:
- EP-A1- 0 812 711
- DE-A1- 4 412 088
- DE-A1-102007 040 816
- DE-U- 1 749 877

## Description

The present invention relates to a tow hitch, which allows to disengage a tow bar from its coupling pin and to make it exit from the respective cavity, without said coupling pin returning to the closed position, with cost savings and a structural simplification compared to systems known so far.

In particular, the present invention is suitable to be used on trucks, for connecting a towing vehicle to a trailer.

Known embodiments of tow hitches are disclosed for example by DE-4412088-A1, EP-0812711-A1 or DE-1749877U.

Tow hitches commonly used on trailer trucks preferably provide a substantially "C" shaped support structure that can be attached to the back of a tractor. On an upper portion of the support structure, a box-like body is provided, containing an actuation mechanism for vertically moving a coupling pin between a closed position, in which it engages a cavity defined by the "C" shaped support structure, and an open position, in which the coupling pin is disengaged from the cavity. When the coupling pin is in the open position, a trailer provided with an appropriate tow bar, having one ring end, or so-called towing-eye end, can be connected to the tractor. This operation is implemented by inserting into the "C" cavity of the support structure the ring end of the tow bar, which is subsequently engaged to the support structure by means of the displacement of the coupling pin from the open position to the closed position.

Subsequently, to separate the trailer from the tractor, the coupling pin can be moved from the closed position to the open position upon the action of an operator who acts manually on a handling lever, mechanically connected to the coupling pin through the actuation mechanism.

More particularly, the handling lever extends from one end of a control shaft rotatably engaged through the box-like body. Inside the box-like body, an arm solidly constrained to the control shaft is suitable to interact with the coupling pin to bring it into the open position as a result of an angular rotation imposed to the control shaft itself by means of the handling lever.

Once the coupling pin is lifted with the consequent disengagement of the ring end of the trailer tow bar, the latter can be separated from the tractor. To automatically determine the translation of the pin in the closed position following the insertion of the tow bar in the cavity, a known method is to provide a mechanism in the hitch which holds the pin in the release position and disengages it from this position, each time the towing eye of the tow bar mechanically interferes with the lower end of the pin itself. This interference does in fact further lift the pin from the release position, determining the disengagement of the mechanism that holds it in the release position to release its translation towards the closed position by an elastic system.

This mechanism thus prevents the intervention of the operator to control the descent of the coupling pin.

However, with the above described mechanism, which causes the descent of the pin at each interference with the towing eye, the operator must intervene on the lever again whenever it is necessary to hitch another trailer to the same tractor, in order to lift the pin and reset the locking mechanism of the same, so as to insert the tow bar of the new trailer.

Attempts to overcome this drawback included the creation of selective locking mechanisms, retaining the pin lifted in the open position and causing the automatic movement of the pin from the open position to the closed position, only when the tow bar is inserted into the hitch. Such mechanism, described in the document IT 1375532, in the name of the same Applicant, exploits the conformation of a guide formed in the upper part of the box-like body, solidly constrained to the support structure, which allows to retain the coupling pin in the open position when the pin itself, thanks to the effect of the extraction movement of the tow bar, is slightly inclined relative to its work axis.

It is noted, however, that the use of this selective locking mechanism entails a considerable increase in constructive complexity and cost of the hitch. In this regard, the applicant has observed that the selective locking device is a component completely unrelated to the coupling pin and requires the realization of specific special components to be installed on the upper portion of the support structure in place of the components normally used for traditional hitches. For example, the conformation of the guide must be also functional to the maintenance of the coupling pin when the same is in the disengagement position, resulting in an increase in the constructive complexity of the device.

Also to be considered is the fact that the actuation mechanism, which allows to vertically move the coupling pin, must be changed compared to conventional ones, due to the configuration of the selective locking device comprising the guide.

The object of the present invention is to provide a tow bar, suitable to permit the decoupling between the tractor and trailer without the coupling pin returning in the closed position, with a saving on production costs compared to the known solutions.

Another object of the present invention is to develop a tow bar, suitable to allow the decoupling between the tractor and trailer without the coupling pin returning in the closed position, and suitable to be realized without the use of many special parts in place of components normally employed in the production of conventional hitches.

A further object is that the hitch in question is suitable to be obtained also by means of simple modifications to already existing conventional hitches, with the simple replacement of a minimum number of components.

These and other aims, which will become apparent in the course of the following description, are achieved by a tow hitch for trailer vehicles, comprising the features expressed in Claim 1.

In particular, according to the present invention, the realization of the coupling pin in two separate parts allows to transmit to the holding portion of the pin an angular swinging during the extraction phase of the tow bar, without significantly lifting the upper part of the pin itself, integrating the control head.

It is thus possible to perform the disengagement of the tow bar without causing the return of the pin in the closed position. In fact, the absence of the control head movement prevents the disengagement of the locking device and the consequent return of the pin towards the closed position.

The present invention therefore is suitable to be implemented by replacing the traditional hitch with a coupling pin only, and if appropriate one or a very limited number of other components of the hitch. In particular, by way of example, it is possible to employ, if necessary, a box-like body, the inner conformation of which allows accommodating the oscillatory movement of the holding portion of the pin.

The use of a noble material with high mechanical and wear resistance can be advantageously limited to the realization of the portion of the holding portion of the coupling pin, which has a size and a weight significantly lower than that of the monolithic pins employed in the prior art. The result is a further saving in terms of raw material costs.

The holding portion, having a significantly reduced length compared to that of the monolithic pins of the prior art, greatly simplifies the mechanical machining that, in the prior art, must be carried out in the upper part of the pin itself to derive the work areas of the movement means.

The control head can be in turn made of less noble material, for example by die-casting, without requiring demanding additional finishing machining, for example to derive the engagement seats of the locking device and/or of the movement means.

The invention may also exhibit one or more of the preferred characteristics listed below.

Preferably, the movement means operate on said control head. Preferably, said coupling pin is operatively engageable by the movement means and/or by said locking device at the control head.

Preferably, the control head and the holding portion are mutually rotatable according to a single predetermined swinging plane, parallel to said work axis.

The controlled movement of the holding portion with respect to the control head is thus guaranteed.

Preferably, in the open position, the spheroidal expansion is accommodated in a guide opening formed through the first portion of the support structure.

Therefore, the spheroidal expansion is suitable to define the rotation centre of the holding portion with respect to the control head.

Preferably, in the closed position, the holding portion is slidably engaged through the first portion and the second portion of the support structure.

The mutual movement between the holding portion and the control head is therefore inhibited when the coupling pin is in the closed position.

Preferably, the control head has a substantially cylindrical, internally hollow conformation, which is opened towards the holding portion. Preferably, the control head has a base wall bearing a gripping cusp facing towards the holding portion.

Preferably, said gripping cusp is operatively engageable by said movement means and/or by said locking device.

The gripping cusp is suitable to be advantageously integrally formed on the control head, directly in phase of realization, for example by die-casting, without requiring demanding machining and/or the use of additional parts.

Preferably, the holding portion has a first end that works slidingly resting on an abutment wall, solidly constrained to the support structure.

A correct guiding action of the holding portion during the translation of the pin between the closed position and the open position is therefore favoured.

Preferably, the first end of the holding portion is movable away from the abutment wall following the movement of the holding portion with respect to the control head.

Preferably, the support structure has, on the side opposite to the abutment wall, a housing for the first end of the holding portion, when the latter is moved away from the abutment wall.

Following the movement of the holding portion with respect to the control head, the first end of the holding portion is therefore suitable to be received in the housing in the absence of mechanical interferences.

Preferably, the control head works slidingly resting against an abutment wall, solidly constrained to the support structure.

A correct guiding action of the control head during the translation of the pin between the closed position and the open position is therefore favoured. Preferably, the first end of the holding portion and the control head both operate on the same abutment wall.

The result is a structural simplification of the hitch.

Preferably, constraining members work between the control head and the holding portion, so that each of the latter moves together with the other along the work axis during movement of the coupling pin between the open position and the closed position.

Preferably, constraint members work between the control head and the holding portion, to drag the holding portion towards the disengagement position as a result of a shift of the control head along said work axis, and/or vice versa.

It is thus possible to bring the coupling pin into the open position by an action exerted exclusively on the holding head by the lifting means, and/or vice versa.

Preferably, the constraining members comprise at least one guiding seat and at least one protuberance, which are slidingly engaged one to the other, each borne by either said control head or said holding portion.

Preferably, the guiding seat extends according to an arc concentric to the spheroidal expansion of the holding portion.

The swinging of the holding portion around the spheroidal expansion centre is thus accommodated.

Preferably, the protuberance works against one end of the guiding seat so as to keep the control head slidingly resting against the abutment wall.

The control head positioning is thus effectively controlled, even when it is freed by the action of the movement means and/or the locking device. Further characteristics and advantages will become more apparent from the detailed description of a tow hitch preferably for trailer vehicles according to the present invention.

Such description will be set forth hereinafter with reference to the accompanying drawings given only for illustrative purposes and not by way of limitation, in which:
Figure 1 is a side, cross sectional view of the tow hitch according to the present invention, with the coupling pin in the open position, and in an interference relation with the towing eye of a tow bar during insertion of the hitch itself;
Figure 2 is a side, cross sectional view of the tow hitch with the respective coupling pin in the closed position;
Figure 3 is a side, cross sectional view of the tow hitch according to the present invention, with the coupling pin in the open position, and in an interference relation with the towing eye of a tow bar during insertion of the hitch itself;

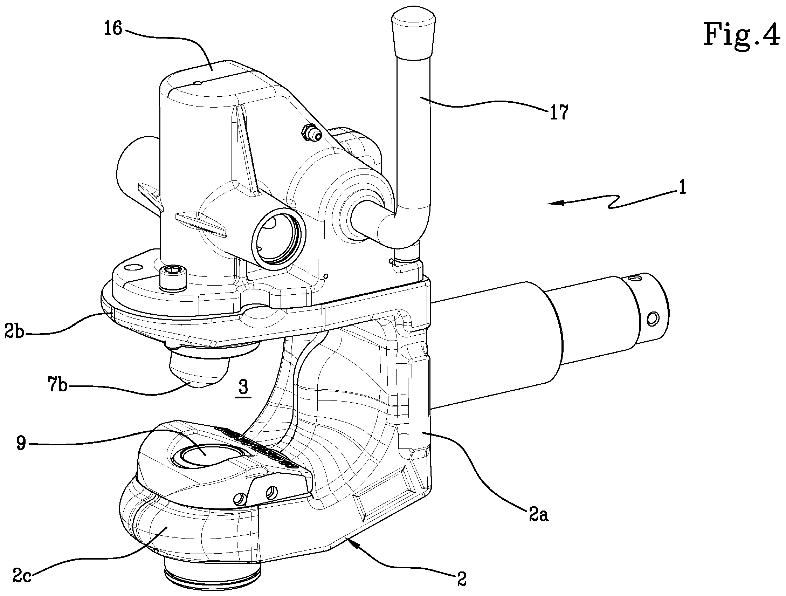

Figure 4 shows a perspective view of a detail of the tow hitch;

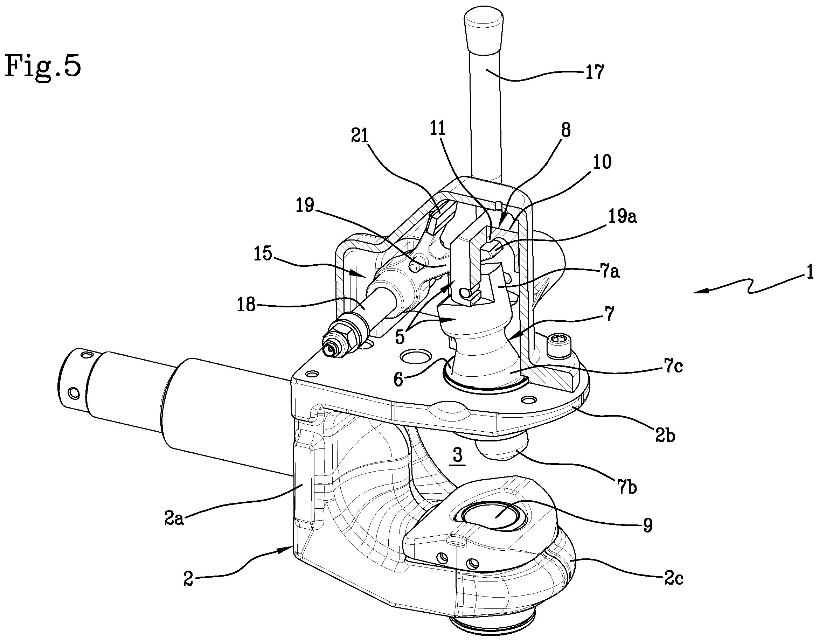

Figure 5 is a partially interrupted cross sectional view of the tow hitch, with the respective coupling pin in the open position;

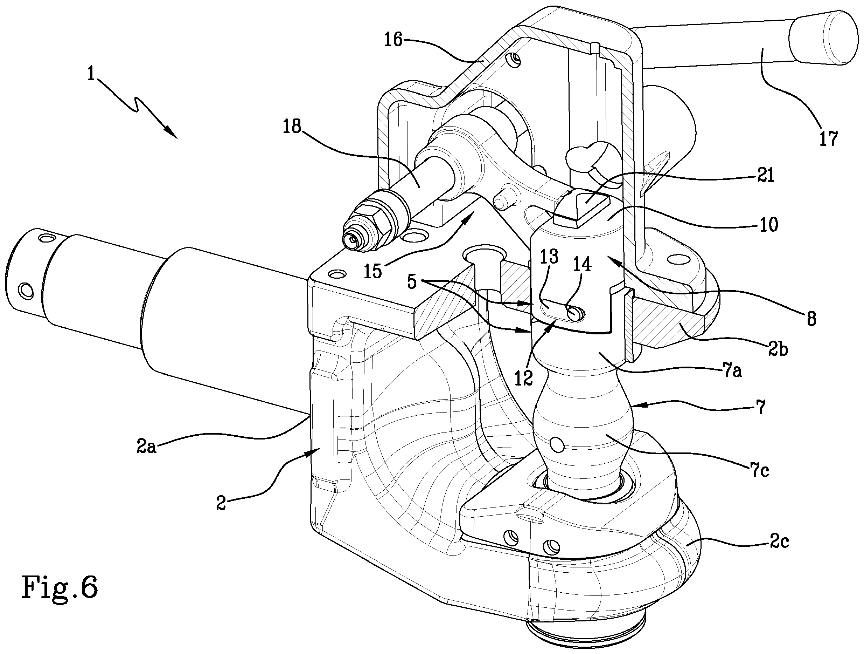

Figure 6 is a partially interrupted cross sectional view of the tow hitch, with the respective coupling pin in the closed position.

With reference to the attached figures, the number 1 globally indicates a tow hitch, preferably for trailer vehicles, according to the present invention.

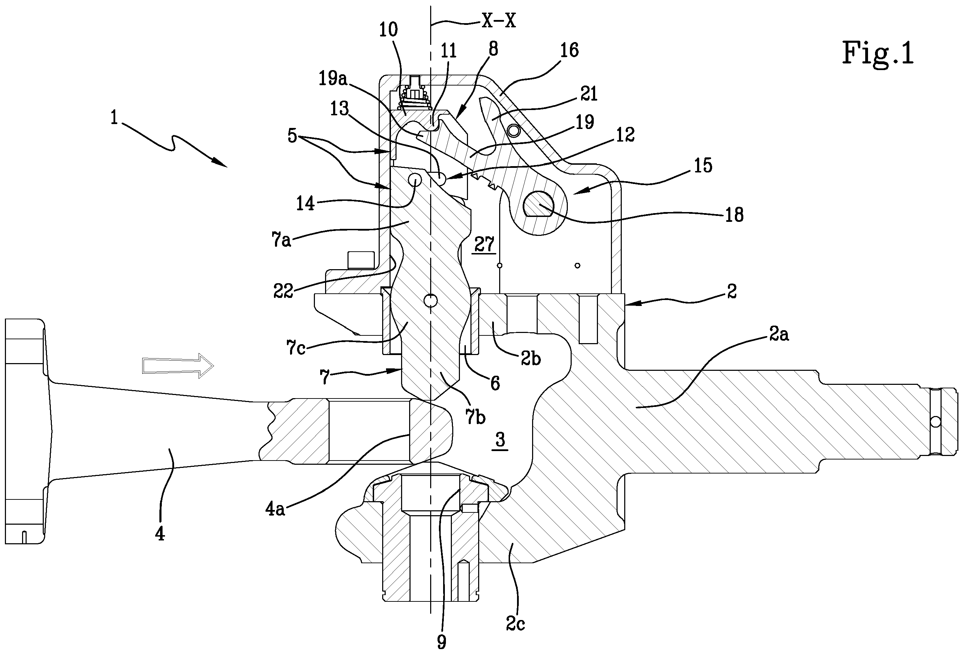

The hitch 1 comprises a substantially "C" shaped support structure 2, having a central body 2a, for example shaped as a tang, rigidly constrainable to a tractor. A first and a second portion 2b, 2c, mutually spaced apart, respectively upper and lower in the example shown, extend from the central body 2a. Between the first and the second portion 2b, 2c a cavity 3 is defined and arranged to receive one ring end 4a of a tow bar 4, of known type and illustrated for clarity in Figures 1 to 3, associated to a trailer.

The front part of cavity 3 may be provided with a guiding member, not shown since it is known, and usually called "bell", which facilitates the entry of the tow bar 4 in the cavity 3 of the hitch 1 during the coupling operation.

The tow hitch 1 also comprises a coupling pin 5, slidably guided through a guide opening 6 formed in the first portion 2b. The coupling pin 5 is longitudinally movable along a respective work axis X-X, between a closed position in which it engages the cavity 3 to be inserted in the ring end 4a of the tow bar 4 when the trailer is attached to the tractor, and an open position in which it frees access to the cavity 3, to allow engagement and disengagement of the tow bar 4 and, therefore, of the trailer.

The coupling pin 5 is advantageously divided into a holding portion 7, intended for mechanical engagement of the tow bar 4, and a control head 8, through which the movement of the coupling pin 5 from the closed position to the open position is determined.

The holding portion 7 has a spheroidal intermediate expansion 7c, arranged in an intermediate region of its longitudinal development, between a first and a second end 7a, 7b. The first end 7a of the holding portion 7 has a cylindrical configuration, preferably with a diameter corresponding to the maximum diameter of the spheroidal expansion 7c. The second end 7b of the coupling pin 5 has a substantially truncated conical tapering. In the closed position, the first end 7a and the second end 7b engage with each other, substantially in the absence of side clearance, respectively in the guide opening 6 and into an insertion opening 9, arranged in the second coupling portion 2c of the support structure 2. The holding portion 7 is thus slidably engaged through the first portion 2b and the second portion 2c of the support structure 2.

The control head has a substantially cylindrical, internally hollow configuration, opened towards the holding portion 7. A base wall 10 of the control head 8 carries a gripping cusp 11 facing towards the holding portion 7.

The control head 8 and the holding portion 7 are mutually movable transversely with respect to the work axis X-X, preferably rotatable according to a predetermined swinging plane, parallel to said work axis X-X.

Constraining members work between the control head 8 and the holding portion 7, so that each of the latter moves together with the other along the work axis X-X during movement of the coupling pin 5 between the open position and the closed position. In other words, the holding portion 7 is dragged towards the release position as a result of a translation of the control head 8 along said work axis X-X, and/or vice versa.

The constraining members 12 comprise preferably at least one guiding seat 13 and at least one protuberance 14, that are slidingly engaged one to the other, each borne by either said control head 8 or said holding portion 7. In the illustrated example, there are two guiding seats 13, formed at diametrically opposite positions at at least one side wall of control head 8. Each guiding seat 13 is defined by an elongated opening extending in an arched profile, preferably according to an arc concentric to the spheroidal expansion 7c. The protuberance 14 may in turn be defined by a pin fixed to the first end 7a of the holding portion 7. Each terminal portion of the pin slidably engages into one of the guiding seats 13.

The control head 8 is suitable to interact with the movement means 15, preferably operating within a box-like body 16, solidly constrained to the support structure 2. The movement means 15 can be actuated for example manually, by a lever 17 external to the box-like body 16, to move the coupling pin 5 from the closed position to the open position. The movement means 15 comprise a control shaft 18, carried by the box-like body 16 rotatably around an axis substantially orthogonal to a longitudinal central plane of the hitch 1, containing the working axis X-X and coincident with the longitudinal central plane of the vehicle on which the hitch itself is mounted.

From the control shaft 18 a thrust arm 19, operating in a work location 20, preferably formed inside the control head 8 or between the latter and the holding portion 7, extends radially, internal to the box-like body.

More particularly, the thrust arm 19 is suitable to act against the base wall 10 of the control head 8, preferably at the gripping cusp 11, to determine the displacement of the coupling pin 5 from the closed position to the open position.

On the control shaft 18 operates the lever 17, actuated manually by an operator to determine, in contrast to a torsion spring or other elastic means, not shown since feasible in a known way, an angular rotation of the thrust arm 19 from a first position to a second position, corresponding respectively to the closed position and the open position of the pin 6.

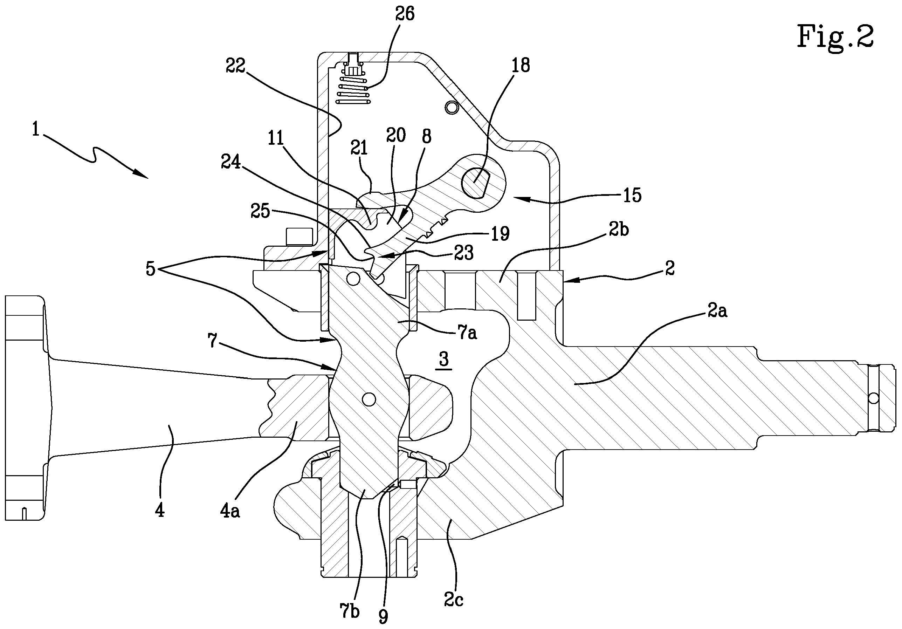

In the first position, illustrated in Figure 2, the thrust arm 19 is inclined downwards, preferably disengaged from the control head 8, while the coupling pin 5 is in the closed position. A possible auxiliary arm 21, solidly constrained to the thrust arm 19, can be arranged to operate on the control head 8, at the base wall 10, to retain the coupling pin 5 in the closed position.

When it rotates towards the second position, the thrust arm 19 moves upwards with reference to Figure 2, engaging the control head 8 at the gripping cusp 11, so as to move the coupling pin 5 towards the open position.

At least one abutment wall 22, solidly constrained to the support structure 2, preferably made inside the box-like body 16, serves as a sliding bearing for the first end 7a of the holding portion 7, and/or for the control head 8, during the translation of the coupling pin 5 between the closed position and the open position. In the illustrated example, both said first end 7a and said control head 8 operate in a slidable abutting relation against the same abutment wall 22.

Upon reaching the open position, a locking device 23 is suitable to retain the coupling pin 5 by preventing the return to the closed position upon the action of resilient means acting on the control shaft 18. The locking device can comprise, for example, a stop projection 24 projecting from the thrust arm 19 to define, together with an end portion 19a of the thrust arm 19 itself, an insertion seat 25 facing towards the control head 8.

During the movement of the coupling pin 5 towards the open position, the thrust arm 19 acts against the gripping cusp 11, which flows gradually towards the stop projection 24 in the direction of the end portion 19a. Upon reaching the open position, the gripping cusp 11 bypasses the stop projection 24 to fit in the insertion seat 25, possibly with the aid of a opposing spring 26 housed in the box-like body 16.

Once housed in the insertion seat 25, the gripping cusp 11 is suitable to interact against the stop projection 24 so as to counter, also due to the abutment of the control head 8 against the abutment wall 22, the action of the elastic means, which tend to rotate the thrust arm 19 towards the first position.

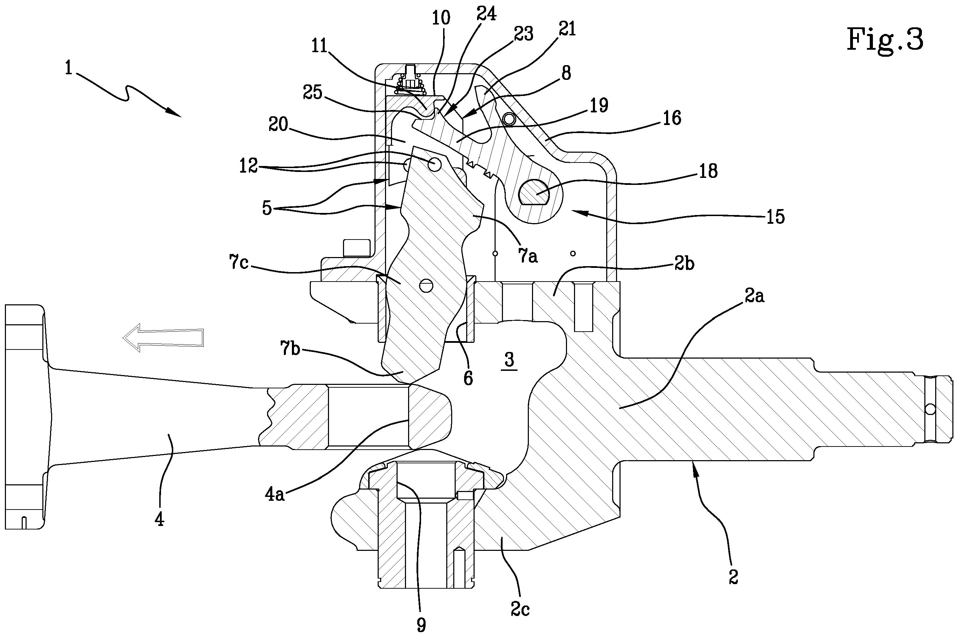

As shown in Figure 1 and 3, in the open position the coupling pin 5 protrudes into the cavity 3 by means of the second end 7b of the holding portion 7, to interfere with the end 4a of the tow bar 4 4 during the actions of insertion and extraction of the same.

In the insertion phase, as can be seen from Figure 1, the interference of the tow bar 4 with the second end 7b of the holding portion 7 determines a slight displacement of the coupling pin 5 along the work axis X-X, away from the second portion 2c of the support structure 2. It follows that the gripping cusp 11 escapes from the insertion seat 25 and releases the coupling pin 5 from the open position, freeing the passage of the stop projection 24, then the rotation of the thrust arm 19 towards the first position.

The coupling pin 5 is consequently brought to the closed position, engaging through the end of the tow bar 4 to constrain it to the hitch, as shown in Figure 2.

Advantageously, when the coupling pin 5 is in the closed position, as well as during its movement towards the open position, the positioning stability of control head 8 is favoured by the protuberance 14 in abutment against one end of the guiding seats 13. The control head 8 is in fact maintained in a slidable abutting relation against the abutment wall 22, without risking that it tends to lean away from the same.

To obtain disengagement from the hitch 1, the tow bar 4 is to be extracted from the cavity 3 after positioning of the coupling pin 5 into the open position.

Advantageously, in the open position, the constraining members 12 enable the swinging of the holding portion 7 with respect to the control head 8, with an angular rotation concentric to the preferably spheroidal expansion 7c, thanks to the sliding of the protuberance 14 along the arched guiding seats 13. The first end 7a of the holding portion 7 subsequently moves away from the abutment wall 22, and is received in a housing 27 arranged in the support structure 2, inside the box-like body 16, on the side opposite to the abutment wall 22.

The subsequent inclination of the holding portion 7 determines a dimensional increase of the outlet defined between the second portion 2c of the support structure 2 and the second end 7b of the holding portion 7 of the pin. The tow bar 4 can therefore escape from the cavity, past the second end 7b of the holding portion 7 without causing axial movements of the control head 8, or causing the latter to displace insufficiently as to determine the disengagement of the gripping cusp 11 by engaging the insertion seat 25.

The coupling pin 5 will therefore be retained in the open position until a new insertion of a tow bar 4 in the cavity.

## Claims

1. A tow hitch preferably for trailer vehicles, comprising:
a support structure (2) having a central body (2a) that is engageable to a tractor, a first portion (2b) and a second portion (2c) extending from the central body (2a), and spaced away from each other so as to define a cavity (3) suitable for receiving a tow bar (4);
a coupling pin (5) slidingly guided through the first portion (2b) and longitudinally movable along a work axis (X-X) between a closed position wherein it engages said cavity (3) and an open position wherein it frees access to said cavity (3);
movement means (15) operating on the coupling pin (5) and operable for moving the latter from the closed position to the open position;
a locking device (23) that retains the pin in the open position, and releases the pin from the open position following movement of the pin along said work axis (X-X) away from the second portion (2c) of the support structure (2);
**characterized in that** said coupling pin (5) comprises a control head (8) and a holding portion (7) that are reciprocally movable transversely with respect to said work axis, wherein said coupling pin (5) is operatively engageable by the movement means (15) and by said locking device (23) at the control head (8), and wherein the control head (8) and the holding portion (7) are reciprocally rotatable according to a predetermined swinging plane, parallel to said work axis (X-X), concentrically with a spheroidal intermediate expansion (7c) exhibited by the holding portion (7)

2. The hitch according to claim 1 wherein the control head (8) has a base wall (10) bearing a gripping cusp (11) facing the holding portion (7).

3. The hitch according to one or more of the preceding claims, wherein the holding portion (7) has a first end (7a) that works slidingly resting against an abutment wall (22) solidly constrained to the support structure (2).

4. The hitch according to one or more of the preceding claims, wherein the control head (8) works slidingly resting against an abutment wall (22) solidly constrained to the support structure (2).

5. The hitch according to one or more of the preceding claims, wherein constraining members (12) work between the control head (8) and the holding portion (7), so that each of the latter moves together with the other along the work axis (X-X) during movement of the coupling pin (5) between the open position and the closed position.

6. The hitch according to the preceding claim, wherein the constraining members (12) comprise at least one guiding seat (13) and at least one protuberance (14), that are slidingly engaged one to the other, each borne by either said control head (8) or said holding portion (7).

7. The hitch according to claim 6, wherein the guiding seat (13) extends according to an arc that is concentric with a spheroidal intermediate expansion (7c) exhibited by the holding portion (7).

8. The hitch according to one or more of claims 6 to 7, wherein the protuberance (14) works against one end of the guiding seat (13) so as to keep the control head (8) slidingly resting against the abutment wall (22).

9. The hitch according to claim 2 wherein said gripping cusp (11) is operatively engageable by said movement means (15) and/or by said locking device (23).

## Patentansprüche

1. Anhängekupplung, vorzugsweise für Anhängerfahrzeuge, umfassend:
eine Halterungsstruktur (2), aufweisend einen mittigen Körper (2a), der an einem Traktor befestigt werden kann, wobei sich ein erster Abschnitt (2b) und ein zweiter Abschnitt (2c) vom mittigen Körper (2a) und voneinander beabstandet erstrecken, um einen Hohlraum (3) zu definieren, der geeignet ist, um eine Zugstange (4) aufzunehmen;
einen Kupplungszapfen (5), der verschiebbar durch den ersten Abschnitt (2b) geführt wird und längsseitig entlang einer Arbeitsachse (X-X) zwischen einer geschlossenen Position, in der er in den Hohlraum (3) eingreift, und einer offenen Position, in der er den Zugang zum Hohlraum (3) freigibt, bewegbar ist;
Bewegungsmittel (15), wirkend auf den Kupplungszapfen (5) und betätigbar, um diesen von der geschlossenen Position in die offene Position zu bewegen;
eine Verriegelungsvorrichtung (23), die den Zapfen in der offenen Position hält und den Zapfen aus der offenen Position freigibt gemäß der Bewegung des Zapfens entlang der Arbeitsachse (X-X), wegführend vom zweiten Abschnitt (2c) der Halterungsstruktur (2),
**dadurch gekennzeichnet, dass** der Kupplungszapfen (5) einen Steuerkopf (8) und einen Halteabschnitt (7) umfasst, die gegenseitig quer zur Arbeitsachse bewegbar sind, wobei der Kupplungszapfen (5) betriebswirksam durch die Bewegungsmittel (15) und die Verriegelungsvorrichtung (23) am Steuerkopf (8) eingreifbar ist, und wobei der Steuerkopf (8) und der Halteabschnitt (7) gegenseitig gemäß einer vorgegebenen Schwingungsebene drehbar sind, parallel zur Arbeitsachse (X-X), konzentrisch mit einer kugelförmigen Zwischenausdehnung (7c), die der Halteabschnitt (7) aufweist.

2. Anhängekupplung Ansprüche 1, wobei der Steuerkopf (8) eine Basiswand (10) aufweist, die einen Greifzacken (11) trägt, zugewandt dem Halteabschnitt (7).

3. Anhängekupplung nach einem oder mehreren der vorhergehenden Ansprüche, wobei der Halteabschnitt (7) ein erstes Ende (7a) aufweist, das verschiebbar anschlagend an eine Anschlagswand (22) arbeitet, fest verbunden mit der Halterungsstruktur (2).

4. Anhängekupplung nach einem oder mehreren der vorhergehenden Ansprüche, wobei der Steuerkopf (8) verschiebbar anschlagend an eine Anschlagswand (22) arbeitet, fest verbunden mit der Halterungsstruktur (2).

5. Anhängekupplung nach einem oder mehreren der vorhergehenden Ansprüche, wobei Spannelemente (12) zwischen dem Steuerkopf (8) und dem Halteabschnitt (7) arbeiten, sodass sich der Letztere zusammen mit dem anderen entlang der Arbeitsachse (X-X) während der Bewegung des Kupplungszapfens (5) zwischen der offenen Position und der geschlossenen Position bewegt.

6. Anhängekupplung nach dem vorhergehenden Anspruch, wobei die Spannelemente (12) mindestens einen Führungssitz (13) und mindestens einen Vorsprung (14) aufweisen, die verschiebbar ineinander eingreifen und jeweils entweder vom Steuerkopf (8) oder vom Halteabschnitt (7) getragen werden.

7. Anhängekupplung nach Anspruch 6, wobei sich der Führungssitz (13) nach einem Bogen erstreckt, der konzentrisch zu einer kugelförmigen Zwischenausdehnung (7c) angeordnet ist, die der Halteabschnitt (7) aufweist.

8. Anhängekupplung nach einem oder mehreren der Ansprüche 6 bis 7, wobei der Vorsprung (14) gegen ein Ende des Führungssitzes (13) arbeitet, sodass der Steuerkopf (8) verschiebbar gegen die Anschlagswand (22) anschlägt.

9. Anhängekupplung nach Anspruch 2, wobei der Greifzacken (11) betriebswirksam von den Bewegungsmitteln (15) und/oder von der Verriegelungsvorrichtung (23) eingegriffen werden kann.

## Revendications

1. Crochet d'attelage de préférence pour des remorques, comprenant :
une structure de support (2) comportant un corps central (2a) pouvant se mettre en prise avec un tracteur, une première partie (2b) et une seconde partie (2c) se prolongeant du corps central (2a) et éloignées l'une de l'autre de manière à définir une cavité (3) pouvant recevoir une barre de remorquage (4) ;
une cheville d'accouplement (5) guidée de façon coulissante à travers la première partie (2b) et mobile longitudinalement le long d'un axe de travail (X-X) entre une position de fermeture dans laquelle elle se met en prise avec ladite cavité (3) et une position d'ouverture dans laquelle elle libère l'accès à ladite cavité (3) ;
des moyens de déplacement (15) agissant sur la cheville d'accouplement (5) et pouvant fonctionner pour déplacer cette dernière de la position de fermeture à la position d'ouverture ;
un dispositif de verrouillage (23) retenant la cheville dans la position d'ouverture, et libérant la cheville de la position d'ouverture suite au mouvement de la cheville le long dudit axe de travail (X-X) éloigné de la seconde partie (2c) de la structure de support (2) ;
**caractérisé en ce que** ladite cheville d'accouplement (5) comprend une tête de commande (8) et une partie de retenue (7) étant réciproquement mobiles transversalement au dit axe de travail, dans lequel ladite cheville d'accouplement (5) peut se mettre en prise de façon fonctionnelle avec les moyens de déplacement (15) et avec ledit dispositif de verrouillage (23) en correspondance de la tête de commande (8), et dans lequel la tête de commande (8) et la partie de retenue (7) peuvent réciproquement pivoter selon un plan oscillant prédéfini, parallèle au dit axe de travail (X-X), concentriquement avec une extension intermédiaire sphéroïdale (7c) présentée par la partie de retenue (7).

2. Crochet selon la revendication 1, dans lequel la tête de commande (8) comporte une paroi de base (10) supportant une cuspide de préhension (11) faisant face à la partie de retenue (7).

3. Crochet selon l'une ou plusieurs des revendications précédentes, dans lequel la partie de retenue (7) comporte une première extrémité (7a) fonctionnant en appui de façon coulissante contre une paroi de butée (22) solidaire de la structure de support (2).

4. Crochet selon l'une ou plusieurs des revendications précédentes, dans lequel la tête de commande (8) fonctionne en appui de façon coulissante contre une paroi de butée (22) solidaire de la structure de support (2).

5. Crochet selon l'une ou plusieurs des revendications précédentes, dans lequel des organes de retenue (12) fonctionnent entre la tête de commande (8) et la partie de retenue (7), de sorte que chacun de ces derniers se déplace conjointement le long de l'axe de travail (X-X) lors du mouvement de la cheville d'accouplement (5) entre la position d'ouverture et la position de fermeture.

6. Crochet selon la revendication précédente, dans lequel les organes de retenue (12) comprennent au moins un siège de guidage (13) et au moins une saillie (14) étant réciproquement engagés de façon coulissante, chacun supporté soit par ladite tête de commande (8) soit par ladite partie de retenue (7).

7. Crochet selon la revendication 6, dans lequel le siège de guidage (13) se prolonge selon un arc étant concentrique à l'extension intermédiaire sphéroïdale (7c) présentée par la partie de retenue (7).

8. Crochet selon une ou plusieurs des revendications de 6 à 7, dans lequel la saillie (14) fonctionne contre une extrémité du siège de guidage (13) de manière à maintenir la tête de commande (8) en appui de façon coulissante contre la paroi de butée (22).

9. Crochet selon la revendication 2, dans lequel ladite cuspide de préhension (11) se met en prise de façon fonctionnelle avec lesdits moyens de déplacement (15) et/ou avec ledit dispositif de verrouillage (23).
